# EUROPEAN PATENT SPECIFICATION

(11) **EP 3 847 422 B1**
(45) Date of publication and mention of the grant of the patent: **29.11.2023**
(21) Application number: 19872129.2
(22) Date of filing: 11.10.2019
(51) Int. Cl.: G01L 9/00, G01L 1/14, G01D 21/00

(54) **A UNIVERSAL FIT INSPECTION PLUG SYSTEM**
PRÜFSTECKERSYSTEM MIT UNIVERSELLER PASSFORM
SYSTÈME DE FICHE D'INSPECTION À AJUSTEMENT UNIVERSEL

(30) Priority: 11.10.2018 AU 2018903844
(43) Date of publication of application: 14.07.2021
(73) Proprietor: Mason, Jay, Cronulla, New South Wales 2230 (AU); Goddard, Michael, Cardiff South, New South Wales 2230 (AU)
(72) Inventor: Mason, Jay, Cronulla, New South Wales 2230 (AU); Goddard, Michael, Cardiff South, New South Wales 2230 (AU)
(74) Representative: Vesterinen, Jussi Tapio
(86) International application number: PCT/AU2019/051103
(87) International publication number: WO 2020/073096

(56) References cited:
- US-A- 4 246 908
- US-A- 4 320 343
- US-A- 4 355 912
- US-A- 4 563 902
- US-A- 5 065 129
- US-A1- 2012 267 393
- US-B1- 6 485 175
- US-B1- 7 267 322

## Description

### Field of the Invention

This invention relates generally to a universal fit inspection plug system wherein different types of probe plugs having different types of sensor probes may be universally inserted within the same main body and valve arrangement.

### Background of the Invention

US7267322B1 discloses a valve assembly providing the ability for internal tank operations providing novel and unique methods for intricate measurement, monitoring, sampling, mixing, isolation, evaluation or other tasks desired inside tanks, vessels, piping or flow applications. The valve assembly is supported by the sidewall of the vessel and extends into a cavity of the vessel. The valve assembly includes a barrel and a valve member. The barrel has a wall defining a chamber. The wall has at least one opening. The valve member is movable between a closed position and an open position.

US4320343A discloses a safety valve for exposing a measuring probe to a fluid comprising a hollow inner valve body with a valve seat movably positioned within a hollow outer valve body having a cooperating valve element for providing fluid-tight engagement when the valve is closed. The inner valve body partially extends from the outer valve body when the valve is open for passage of the fluid into an inner chamber for exposing the inserted probe to the fluid. The probe is secured to the inner valve body by a threaded cap, the movement of which is translated to the inner valve body in the presence of the probe for moving the inner valve body to the open valve position. The valve is prevented from being opened in the absence of the probe by a spring mounted on the outer valve body engaging a catch on the cap for restricting movement thereof preventing the valve from being opened. The valve is latched in the open and closed positions by a Z-shaped slot in the inner valve body cooperating with a guide pin mounted on the outer valve body. The spring further engages a catch in the cap when the inner valve body is in the open position for restricting probe-releasing movement of the cap thereby preventing removal of the probe while the valve is open.

### Summary of the Disclosure

There is provided herein a universal fit inspection plug system comprising a main body having threading therearound for turning into a corresponding threaded inspection aperture and having a main body axial bore therethrough having a plug fitting therein.

The system further comprises a valve slidably engaged within the main body axial bore at a distal end thereof between closed and open positions.

The system further comprises a plurality of probe plugs, each comprising a probe plug body having a main body axial bore fitting. Each probe plug body and main body axial bore fitting is configured for universal fit within the main body axial bore and the probe plug fitting.

Each probe plug is further configured for pushing the valve to the open position. Each probe plug body comprises a probe plug axial bore open at a distal end thereof.

At least a subset of the plurality of probe plugs have different types of sensor probes located within the respective probe plug axial bores thereof for sensing different types of parameters when the valve is in the open position.

The different types of sensor probes may comprise radiation, flowrate, pressure, temperature and capacitive resistive sensor probes.

The valve may comprise a valve body comprising a plurality of sampling apertures through which the different types of sensor probes may sense the interior environment. The sampling apertures may be configured differently according to the different type of sensor probes wherein, for example, non-transversely aligned radial sampling apertures may be employed for inducing turbulent flow and transversely aligned radial sampling apertures may be employed for inducing laminar flow.

As such, a plurality of different probe plug/sensor probe type combinations may be universally inserted or interchanged within the same main body and valve.

For a subset of the probe plugs, the probe plug axial bore extends entirely through the probe plug body, thereby allowing other for sampling at a proximal end thereof (such as by way of a swab or hose connector) or alternatively for the insertion of a sensor probe therethrough.

The system may further comprise a controller comprising a data interface able to be connected to each type of sensor probe and a sensor controller for controlling each different type of sensor probe.

The controller may further comprise sensor mode data for each operational mode of each different type of sensor probe. The controller may further comprise an interface for the selection of a sensor type operational mode, thereby configuring the sensor controller for controlling the chosen type of sensor probe operably coupled to the controller.

The controller may further comprise a data interpretation controller for interpreting data from the different types of sensor probes. As such, for the capacitive resistive type of sensor probe, the data interpretation controller may detect water contamination within an engine cylinder or alternatively oxygen gas contamination within an inert gas chamber, such as an argon gas chamber 3D printing.

According to one aspect, there is provided a universal fit inspection plug system as recited in claim 1.

The probe plug fitting may comprise interior threading and the main body axial bore fitting may comprise a complementary exterior threading.

The valve may comprise a valve body and a valve cap and the valve cap may comprise an exterior periphery which seals against an interior profile of a rim at a distal end of the main body axial bore.

The valve body may comprise a plurality of radial sampling apertures.

A distal end of each sensor probe may terminate between the radial sampling apertures.

The radial sampling apertures may not in transverse alignment to induce turbulent flow therebetween.

The radial sampling apertures may be in transverse alignment to induce laminar flow therebetween.

The probe plug may comprise a distal face which bears against an undersurface of a proximal rim of the valve body to push the valve to the open position.

The probe plug body may comprise a distal minor probe plug body portion and a proximal major probe plug body portion.

The major probe plug body portion may comprise the main body axial bore fitting and the main axial bore fitting may comprise threading.

The main body may comprise a distal minor main body portion and a proximal major main body portion.

The proximal major main body portion may comprise the probe plug fitting and the probe plug fitting may comprise threading.

The proximal major main body portion may comprise a nut for turning the main body.

The system may further comprise a controller, the controller comprising an interface for operably coupling to each different type of sensor and a sensor controller for controlling each different type of sensor probe.

The controller may comprise sensor mode data for different operational modes for each of the different types of sensor probes and the controller may comprise an interface for a selection of one of the different types of sensor probes and the sensor controller may be configured for controlling the one of the different types of sensor probes according to the selection.

The controller may further comprise a data interpretation controller configured for interpreting sensor readings according to threshold settings and the data interpretation controller may be configured for detecting when a sensor reading exceeds a respective threshold setting.

The different types of sensor probes may comprise at least one of a radiation sensor, a flowrate sensor, a pressure sensor, temperature sensor, a capacitive sensor, a resistive sensor and an optical sensor probe.

The sensor may comprise the flowrate sensor probe and the flowrate sensor probe may comprise at least one of an axial vane and pitot tube flowrate sensor probe.

The valve may comprise a valve body and a plurality of radial sampling apertures and the radial sampling apertures may be in transverse alignment to induce laminar flow across the flowrate sensor probe.

The main body may be configured for insertion within the inspection aperture to control the orientation of the transversely aligned radial sampling apertures.

For a subset of the probe plugs, the probe plug axial bore may be a blind hole open at a distal end of the probe plug.

Other aspects of the invention are also disclosed.

### Brief Description of the Drawings

Notwithstanding any other forms which may fall within the scope of the present invention, preferred embodiments of the disclosure will now be described, by way of example only, with reference to the accompanying drawings in which:
Figure 1 shows a universal fit inspection plug system operably coupled to a controller in accordance with an embodiment;
Figure 2 illustrates various probe plug/sensor probe type configurations universally insertable within the same main body/valve combination in accordance with an embodiment;
Figure 3 shows an exploded representation of the universal fit inspection plug system;
Figure 4 illustrates an embodiment wherein the probe plug comprises an axial bore entirely therethrough; and
Figure 5 illustrates a cross-sectional perspective view of the universal fit inspection plug system wherein the valve thereof is in an open position.

### Description of Embodiments

An inspection plug system may comprise a main body 126 having a generally cylindrical body 140 having threading therearound for turning into a corresponding threaded inspection aperture. The main body 126 comprises a main body axial bore 143 therethrough and a probe plug fitting. In a preferred embodiment, the probe plug fitting comprises interior threading 144 at a proximal end of the main body axial bore 143.

The main body 126 may comprise a distal minor cylindrical body portion 140a having the threading 141 thereon and a proximal major cylindrical body portion 140b having a hex nut 142 thereon. In use, the hex nut 142 may be engaged by a spanner to turn the threading 141 into the corresponding threaded inspection aperture of a chamber wherein the minor cylindrical body portion 140a extends through the inspection aperture and the major cylindrical body portion 140b remains exposed.

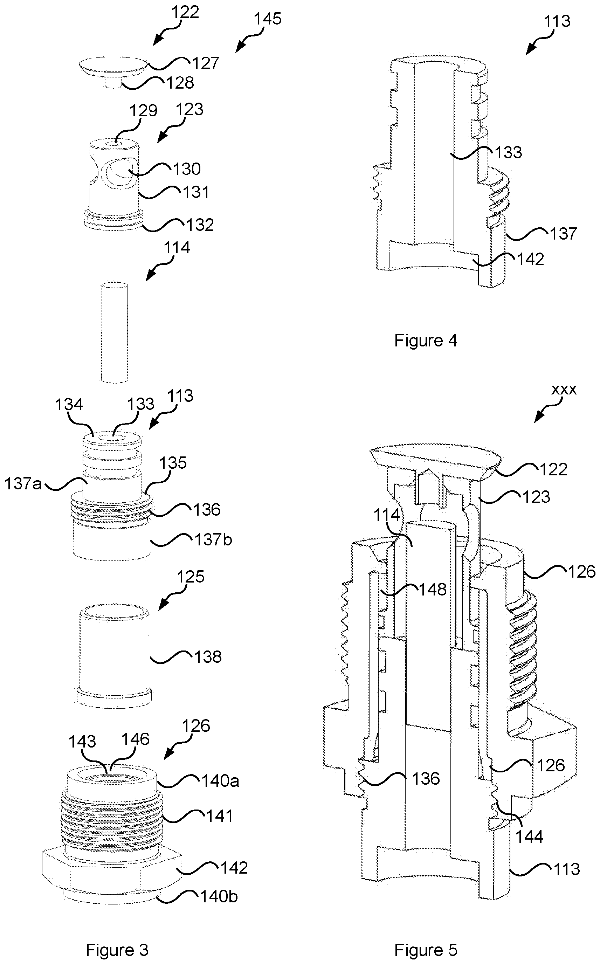

The inspection plug system may further comprise a valve 145 slidably engaged within the main body axial bore 143 between a closed position wherein the valve 145 seals the main body axial bore 143 and an open position wherein the valve 145 does not seal the main body axial bore 143 is shown in Figure 5.

In the embodiments shown, the valve 145 may comprise a valve body 123 and a valve cap 122. The valve body 123 may comprise a cylindrical body 143 comprising a plurality of radial sampling apertures 130. In the embodiment shown, the valve body 123 comprises non-transversely aligned sampling apertures 130 (such as wherein the sampling apertures 130 comprise three sampling apertures 130) for inducing turbulent flow. However, for flow sensing, including for inducing laminar flow or sensing flow in a particular direction, the cylindrical body 143 may comprise transversely aligned sampling apertures 130, such as by comprising a pair or even number of transversely opposing sampling apertures 130.

The main body 126 may be configured to insert within the inspection aperture to control the orientation of the transversely aligned inspection apertures 130 so that, for example, a flowrate sensor probe 116 may sense flow in a particular direction. In accordance with this embodiment, the exterior threading 141 of the main body 126 may be configured to control the final rotation orientation of the main body 126 and thereby the orientation of the transversely aligned sampling apertures 130. In alternative embodiments, the proximal end of the main body comprises an orientation indicator indicative of the orientation of the transversely orientated something apertures 130. As such, the user may turn the main body 126 within the inspection aperture to control the orientation of the transversely aligned sampling apertures 130.

A distal end of the cylindrical body 143 may be enclosed with a plate having a central aperture 129 therethrough. The valve cap 122 may comprise a valve plate 127 and a valve stem 128. The valve stem 128 may fasten within the central aperture 129 of the cylindrical body 143 of the valve body 123.

The periphery of the valve plate 127 may comprise an inverse exterior chamfer which bears flush against a corresponding interior chamfer of a rim 146 of a distal end of the main body 126. When the inverse exterior chamfer of the valve plate 127 bears flush against the corresponding inner chamfer of the rim 146 of the main body 126, the valve 145 seals the main body axial bore 143. In a preferred embodiment, the seal is fluid tight.

The main body 126 and the valve body 123 may be configured to allow an annular gap 148 within which a compression spring operates to push the valve 145 down to the closed position.

The inspection plug system may further comprise a plurality of probe plugs 113 each of which may comprise a generally cylindrical body 137 and a main body axial bore fitting. In a preferred embodiment shown, the main body axial bore fitting comprises exterior threading 136 which screws into the inner threading 144 of the main body 126.

The cylindrical body 137 of the probe plug 113 may comprise a distal minor cylindrical body portion 137a and a proximal major cylindrical body portion 137b.

The distal minor cylindrical body portion 137a may comprise a distal edge 134 which bears against an undersurface of a proximal rim 132 of the valve body 123 to push the valve 145 to the open position as shown in Figure 5 when the probe plug 113 is inserted through the main body axial bore 143.

The inspection plug system may further comprise a cylindrical sleeve 125 which interfaces between the probe plug 113 and the main body 126 in the manner shown in Figure 5 to limit the insertion of the probe plug 113 and seal between the probe plug 113 and the main body 126.

Each probe plug 113 may further comprise a probe plug axial bore 113 open at a distal end of the probe plug 113.

The inspection plug system may comprise a sensor probe 114 which locates within the distal opening of the probe plug axial bore 114.

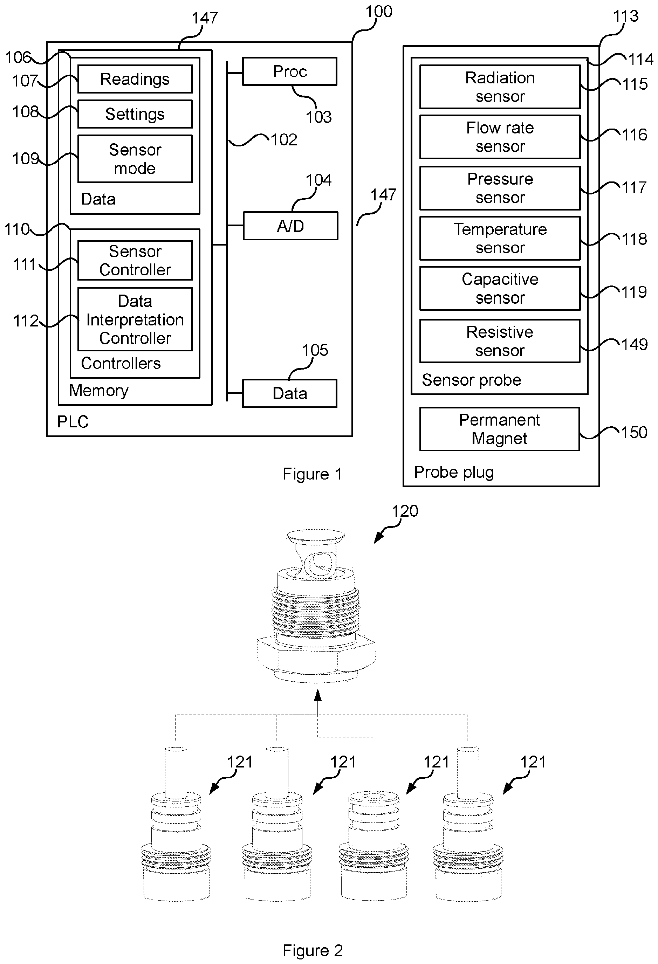

The plurality of probe plugs 113 may comprise a plurality of different types of sensor probes 114 thereby providing a plurality of probe plug/sensor combinations 121 as shown in Figure 2. Each probe plug body 137 and main body axial bore fitting (being the exterior threading 136 in accordance with a preferred embodiment) is configured for universal fit within the main body axial bore 143 and the probe plug fitting (being the interior threading 144 in accordance with a preferred embodiment) such that the probe plug/sensor combinations 121 may be used interchangeably as is illustrated in Figure 2.

Specifically, in accordance with the exemplary arrangement of Figure 2, a plurality of probe plug/sensor combinations 121 may be inserted within a single main body 126 and valve 145 on account of the universal fit thereof. As such, in accordance with the exemplary arrangement of Figure 2, different types of sensor probes 114 may be employed.

In one embodiment shown in Figure 4, the probe plug axial bore extends entirely through the body 137 of the probe plug 113.

In accordance with this embodiment, samples may be drawn via the probe plug axial bore 133 (such as by way of an insertable swab or hose connection) to sample gas or fluid from the chamber. Alternatively, sensor probes 114 may be inserted via the proximal opening of the probe plug axial bore 133.

In embodiments, the probe plug axial bore 133 may widen to an accessible opening 142 at the proximal end of the probe plug body 137.

In alternative embodiments, the probe plug axial bore 133 does not extend entirely through the body 137, taking the form of a blind hole open at a distal end of the probe plug body 137.

In embodiments, the probe plug 113 may retain a permanent magnet 150 used for metallic wear detection.

As such, in accordance with the exemplary embodiment of Figure 2, a first two probe plugs 131 may comprise two different types of sensor probes 114, a third may utilise the axial bore 133 extending therethrough for drawing samples therefrom, such as by way of a hose 15, and fourth may hold the permanent magnet 150. As such, each of these differently configured probe plugs 113 may universally fit within the same main body 126 and valve 145.

Electrical leads 147 may extend through the probe plug body 137 from the sensor probe 114, including through the axial bore 133 where the axial bore 133 extends entirely through the body 137.

Figure 1 shows a system comprising a plurality of probe plugs 113 comprising a plurality of different types of sensor probes 114 therein.

In the embodiment shown, the sensor probes 114 may comprise a radiation sensor 115, a flowrate sensor 116 (including in axial vane or pitot tube flowrate sensor probes), a pressure sensor 117, temperature sensor 118, a capacitive sensor 119 and/or a resistive sensor 149.

In one embodiment, the sensor probe 114 may comprise an optical sensor for liquid clarity monitoring or smoke detection. In accordance with one embodiment, the sensor probe may comprise two optical fibres leading in via a proximal end of the optical sensor and wherein respective distal ends thereof face each other at a distal end of the optical sensor across a gap so as to transmit light across the gap. In embodiments, the optical sensor may comprise a light transmitter and a light receiver therein and a transducer to convert light level readings of the light receiver to electrical signals, analogue or digital.

In embodiments, further different types of sensor probes 114 may be provided.

When the valve 145 is in the open position is shown in Figure 5, the sensor probe 114 is able to sense the interior environment of the chamber via the radial sampling apertures 130 of the valve body 123.

Figure 1 further shows a programmable logic controller (PLC) or similar controller 100 operably coupled to the sensor probe 114 by the electrical leads 147.

The controller 100 comprises a processor 103 for processing digital data. The controller 100 may further comprise a memory device 147 in operable communication with the processor 103 via a system bus 102. The memory device 147 is configured for storing digital data including computer program code instructions. In use, the processor 103 fetches these computer program code instructions and associated data from the memory 147 for interpretation and execution of various control functionality.

The memory device 147 may comprise computer program code instruction controllers 110 which, in embodiments, may comprise a sensor controller 110 configured for controlling different types of sensor probes 114 and a data interpretation controller 112 for interpreting data received therefrom.

The memory 147 may further comprise data 106, which, in embodiments, may comprise readings 107 from the various types of sensor probes 114. The data 106 may further comprise settings 108, including operational threshold settings.

The data 106 may further comprise sensor mode data 109 being sensor operational modes for each type of sensor probe 114.

The controller 100 may comprise an A/D converter 104 or other type of transducer to digitise readings from the sensor probes 114.

The controller 100 may further comprise a data interface 105 for transmitting and receiving data across a local or wide area network such as the Internet.

In use, the controller 100 may be configured for the specific type of sensor probe 114 employed. The sensor mode data 109 may comprise operational data for a plurality of different types of sensor probes 114 and, as such, configuring the controller for a specific type of sensor probe 114 may comprise using a user interface to make a selection of a particular type of sensor probe 114.

For example, the user may configure the controller 100 to interface with the capacitive sensor 119 to sense an emulsion capacitive value within an engine to detect water contamination.

Alternatively, the user may configure the controller 100 to interface with the radiation sensor 115 detect oxygen gas indicative of an oxygen leak within an insert argon gas filled 3D printer chamber.

Once having configured the controller 100 in the sensor mode of operation, the sensor controller 111 users the sensor mode data 109 to control the sensor probe 114 accordingly.

The data 106 may further comprise operational threshold settings 108 which, in embodiments, may be adjusted by the user. For the aforedescribed examples, the operational threshold settings 108 may comprise an emulsion capacitive value above which is indicative of water contamination or oxygen contamination.

As such, in use, the data interpretation controller 112 analyses the reading data 107 with reference to the threshold settings 108 to detect abnormal operation. In embodiments, when detecting abnormal operation, the data interpretation controller 112 may transmit an alert via the data interface 105.

The foregoing description, for purposes of explanation, used specific nomenclature to provide a thorough understanding of the invention. However, it will be apparent to one skilled in the art that specific details are not required in order to practise the invention. Thus, the foregoing descriptions of specific embodiments of the invention are presented for purposes of illustration and description. They are not intended to be exhaustive or to limit the invention to the precise forms disclosed as obviously many modifications and variations are possible in view of the above teachings. The embodiments were chosen and described in order to best explain the principles of the invention and its practical applications, thereby enabling others skilled in the art to best utilize the invention and various embodiments with various modifications as are suited to the particular use contemplated. It is intended that the following claims and their equivalents define the scope of the invention.

The term "approximately" or similar as used herein should be construed as being within 10% of the value stated unless otherwise indicated.

## Claims

1. A universal fit inspection plug system comprising:
a main body (126) having threading therearound for turning into a corresponding threaded inspection aperture, the main body (126) comprising a main body axial bore (143) therethrough having a probe plug fitting therein;
a valve (145) slidably engaged within the main body axial bore (143) at a distal end thereof between a closed position and an open position; and
a plurality of probe plugs (113), each comprising a probe plug body (137) having a main body axial bore fitting therearound, each probe plug body (137) and main body axial bore fitting configured for universal fit within the main body axial bore (143) and the probe plug fitting, each probe plug (113) configured for pushing the valve (145) to the open position when inserted within the main body axial bore (143), the probe plug body (137) comprising a probe plug axial bore (133) open at a distal end thereof, and wherein at least a subset of the plurality of probe plugs (113) have different types of sensor probes (114) located within respective probe plug axial bores (133) thereof for sensing different types of parameters when the valve (145) is in the open position,
wherein for a subset of the probe plugs (113), the probe plug axial bore (133) extends entirely through the respective probe plug bodies (137) and the system further comprises a hose connection for the probe plug body and wherein a respective subset of sensor probes (114) are configured for insertion through the probe plug axial bore (133) from a proximal open end of the probe plug body (137).

2. The system as claimed in claim 1, wherein the probe plug fitting comprises interior threading and wherein the main body axial bore fitting comprises a complementary exterior threading.

3. The system as claimed in claim 1, wherein the valve (145) comprises a valve body (123) and a valve cap (122) and wherein the valve cap (122) comprises an exterior periphery which seals against an interior profile of a rim (146) at a distal end of the main body axial bore (143).

4. The system as claimed in claim 3, wherein the valve body (123) comprises a plurality of radial sampling apertures (130).

5. The system as claimed in claim 4, wherein a distal end of each sensor probe (114) terminates between the radial sampling apertures (130).

6. The system as claimed in claim 4, wherein the radial sampling apertures (130) are not in transverse alignment to induce turbulent flow therebetween.

7. The system as claimed in claim 4, wherein the radial sampling apertures (130) are in transverse alignment to induce laminar flow therebetween.

8. The system as claimed in claim 3, wherein the probe plug (113) comprises a distal face which bears against an undersurface of a proximal rim of the valve body (123) to push the valve (145) to the open position.

9. The system as claimed in claim 1, wherein the probe plug body (137) comprises a distal minor probe plug body portion (137a) and a proximal major probe plug body portion (137b), wherein the major probe plug body portion (137b) comprises the main body axial bore fitting and wherein the main axial bore fitting comprises threading.

10. The system as claimed in claim 1, wherein the main body (126) comprises a distal minor main body portion (140a) and a proximal major main body portion (140b), wherein the proximal major main body portion (140b) comprises the probe plug fitting and wherein the probe plug fitting comprises threading and wherein the proximal major main body portion (140b) comprises a nut (142) for turning the main body (126).

11. The system as claimed in claim 1, further comprising a controller (100), the controller (100) comprising an interface for operably coupling to each different type of sensor and a sensor controller (110) for controlling each different type of sensor probe (114), wherein the controller (100) comprises sensor mode data for different operational modes for each of the different types of sensor probes (114) and wherein the controller (100) comprises an interface for a selection of one of the different types of sensor probes (114) and wherein the sensor controller (110) is configured for controlling the one of the different types of sensor probes (114) according to the selection and, wherein the controller (100) further comprises a data interpretation controller (112) configured for interpreting sensor readings according to threshold settings and wherein the data interpretation controller (112) is configured for detecting when a sensor reading exceeds a respective threshold setting.

12. The system as claimed in claim 1, wherein the different types of sensor probes (114) comprise at least one of a radiation sensor (115), a flowrate sensor (116), a pressure sensor (117), temperature sensor (118), a capacitive sensor (119), a resistive sensor (149) and an optical sensor probe.

13. The system as claimed in claim 12, wherein the sensor comprises the flowrate sensor probe and wherein the flowrate sensor probe comprises at least one of an axial vane and pitot tube flowrate sensor probe, wherein the valve (145) comprises a valve body (123) and a plurality of radial sampling apertures (130) and wherein the radial sampling apertures (130) are in transverse alignment to induce laminar flow across the flowrate sensor probe, wherein the main body (126) is configured for insertion within the inspection aperture to control the orientation of the transversely aligned radial sampling apertures (130).

14. The system as claimed in claim 1, wherein, for a subset of the probe plugs (113), the probe plug axial bore is a blind hole open at a distal end of the probe plug (113).

## Patentansprüche

1. Ein universell passendes Prüfsteckersystem umfassend:
einen Hauptkörper (126) mit einem umlaufenden Gewinde zum Eindrehen in eine entsprechende Inspektionsöffnung mit Gewinde, wobei der Hauptkörper (126) eine axiale Hauptkörperbohrung (143) mit einer darin passenden Sondensteckerspassung aufweist;
ein Ventil (145), das verschiebbar in der axialen Hauptkörperbohrung (143) an einem distalen Ende davon zwischen einer geschlossenen Position und einer offenen Position in Eingriff steht; und
eine Vielzahl von Sondenstecker (113), von denen jeder einen Sondensteckerkörper (137) mit einer darum herum passenden axialen Hauptkörperbohrungspassung umfasst, wobei jeder Sondensteckerkörper (137) und die axiale Hauptkörperbohrungspassung für eine universelle Passung innerhalb der axialen Hauptkörperbohrung (143) und der Sondensteckerspassung konfiguriert sind, jeder Sondenstecker (113) so konfiguriert ist, dass er das Ventil (145) in die offene Position drückt, wenn er in die axiale Hauptkörperbohrung (143) eingeführt wird, wobei der Sondensteckerkörper (137) eine axiale Sondensteckerbohrung (133) aufweist, die an einem distalen Ende davon offen ist, und wobei mindestens eine Teilmenge der Mehrzahl von Sondenstecker (113) über unterschiedliche Arten von Sensorsonden (114) verfügen, die in den jeweiligen axialen Sondensteckerbohrungen (133) angeordnet sind, um unterschiedliche Arten von Parametern zu erfassen, wenn sich das Ventil (145) in der offenen Position befindet,
wobei sich bei einer Teilmenge der Sondenstecker (113) die axiale Sondensteckerbohrung (133) vollständig durch die jeweiligen Sondensteckerkörper (137) erstreckt, wobei das System weiterhin einen Schlauchanschluss für den Sondensteckerkörper umfasst, und wobei eine entsprechende Teilmenge von Sensorsonden (114) zum Einführen durch die axiale Sondensteckerbohrung (133) von einem proximalen offenen Ende des Sondensteckerkörpers (137) aus konfiguriert ist.

2. System nach Anspruch 1, wobei die Sondensteckerspassung ein Innengewinde umfasst, und wobei die axiale Hauptkörperbohrungspassung ein komplementäres Aussengewinde umfasst.

3. System nach Anspruch 1, wobei das Ventil (145) einen Ventilkörper (123) und eine Ventilkappe (122) umfasst, und wobei die Ventilkappe (122) einen Aussenumfang umfasst, der gegen ein Innenprofil eines Randes (146) an einem distalen Ende der axialen Hauptkörperbohrung (143) abdichtet.

4. System nach Anspruch 3, wobei der Ventilkörper (123) mehrere radiale Probenahmeöffnungen (130) umfasst.

5. System nach Anspruch 4, wobei ein distales Ende jeder Sensorsonde (114) zwischen den radialen Probenahmenöffnungen (130) endet.

6. System nach Anspruch 4, wobei die radialen Probenahmeöffnungen (130) nicht in Querrichtung ausgerichtet sind, um dazwischen eine turbulente Strömung zu induzieren.

7. System nach Anspruch 4, wobei die radialen Probenahmeöffnungen (130) in Querrichtung ausgerichtet sind, um dazwischen eine laminare Strömung zu induzieren.

8. System nach Anspruch 3, wobei der Sondenstecker (113) eine distale Fläche aufweist, die an einer Unterseite eines proximalen Randes des Ventilkörpers (123) anliegt, um das Ventil (145) in die offene Position zu drücken.

9. System nach Anspruch 1, wobei der Sondensteckerkörper (137) einen distalen kleinen Sondensteckerkörperabschnitt (137a) und einen proximalen grossen Sondensteckerkörperabschnitt (137b) umfasst, wobei der grosse Sondensteckerkörperabschnitt (137b) den axialen Hauptkörperbohrungspassung umfasst und wobei der axiale Hauptbohrungspassung ein Gewinde aufweist.

10. System nach Anspruch 1, wobei der Hauptkörper (126) einen distalen kleinen Hauptkörperabschnitt (140a) und einen proximalen grossen Hauptkörperabschnitt (140b) umfasst, wobei der proximale grosse Haupthauptkörperabschnitt (140b) die Sondensteckerspassung umfasst, und wobei die Sondensteckerspassung ein Gewinde umfasst, und wobei der proximale grosse Haupthauptkörperabschnitt (140b) eine Mutter (142) zum Drehen des Hauptkörpers (126) umfasst.

11. System nach Anspruch 1, das ausserdem einen Controller (100) umfasst, wobei der Controller (100) eine Schnittstelle zur betriebsfähigen Kopplung mit jedem unterschiedlichen Sensortyp und einen Sensorcontroller (110) zum Steuern jedes unterschiedlichen Typs von Sensorsonden (114) umfasst, wobei der Controller (100) Sensormodusdaten für unterschiedliche Betriebsmodi für jeden der verschiedenen Typen von Sensorsonden (114) umfasst, und wobei der Controller (100) eine Schnittstelle für eine Auswahl eines der verschiedenen Typen von Sensorsonden (114) umfasst, und wobei der Sensorcontroller (110) so konfiguriert, dass er je nach Auswahl einen der verschiedenen Typen von Sensorsonden (114) steuert, und wobei der Controller (100) ausserdem einen Dateninterpretationscontroller (112) umfasst, der zum Interpretieren von Sensormesswerten gemäss Schwellenwerteinstellungen konfiguriert ist, und wobei der Dateninterpretationscontroller (112) konfiguriert ist zu erkennen wenn ein Sensormesswert einen entsprechenden Schwellenwert überschreitet.

12. System nach Anspruch 1, wobei die verschiedenen Arten von Sensorsonden (114) mindestens einen von einem Strahlungssensor (115), einem Durchflusssensor (116), einem Drucksensor (117), einem Temperatursensor (118), einem kapazitiven Sensor (119), einem Widerstandssensor (149) und einer optischen Sensorsonde umfassen.

13. System nach Anspruch 12, wobei der Sensor die Durchflusssensorsonde umfasst und wobei die Durchflusssensorsonde mindestens eine Durchflusssensorsonde mit axialem Flügelrad oder Staurohr umfasst, wobei das Ventil (145) einen Ventilkörper (123) und mehrere radiale Probenahmeöffnungen (130) umfasst, und wobei die radialen Probenahmeöffnungen (130) in Querrichtung ausgerichtet sind, um eine laminare Strömung über die Durchflusssensorsonde zu induzieren, wobei der Hauptkörper (126) zum Einsetzen in die Inspektionsöffnung konfiguriert ist, um die Ausrichtung der quer ausgerichteten radialen Probenahmeöffnungen (130) zu steuern.

14. System nach Anspruch 1, wobei für eine Teilmenge der Sondenstecker (113) die axiale Sondensteckerbohrung ein Sackloch ist, das an einem distalen Ende des Sondensteckers (113) offen ist.

## Revendications

1. Système de fiche d'inspection à ajustement universel comprenant :
un corps principal (126) comportant un filetage autour pour s'enfoncer en tournant en une ouverture d'inspection filetée correspondante, le corps principal (126) comprenant un alésage axial du corps principal (143) à travers lequel est monté un raccord de fiche de sonde;
une valve (145) engagée de manière coulissante dans l'alésage axial du corps principal (143) au niveau d'une extrémité distale de celui-ci entre une position fermée et une position ouverte ; et
une pluralité de fiches de sonde (113), comprenant chacune un corps de fiche de sonde (137) comportant un raccord à alésage axial du corps principal autour de celui-ci, chaque corps de fiche de sonde (137) et chaque raccord à alésage axial du corps principal étant configurés pour un ajustement universel à l'intérieur de l'alésage axial du corps principal (143) et du raccord de fiche de sonde, chacune fiche de sonde (113) configurée pour pousser la valve (145) vers la position ouverte lorsqu'elle est insérée dans l'alésage axial du corps principal (143), le corps de fiche de sonde (137) comprenant un alésage axial de fiche de sonde (133) ouvert à une extrémité distale de celui-ci, et dans lequel au moins un sous-ensemble de la pluralité de fiches de sonde (113) comportent différents types de sondes de capteur (114) situées dans les alésages axiaux de fiche de sonde (133) respectifs pour détecter différents types de paramètres lorsque la valve (145) est en position ouverte,
dans lequel pour un sous-ensemble de fiches de sonde (113), l'alésage axial de fiche de sonde (133) s'étend entièrement à travers les corps de fiche de sonde (137) respectifs et le système comprend en outre un raccord de tuyau pour le corps de fiche de sonde dans lequel un sous-ensemble respectif de sondes de capteur (114) est configuré pour être inséré à travers l'alésage axial de fiche de sonde (133) à partir d'une extrémité ouverte proximale du corps de fiche de sonde (137).

2. Système selon la revendication 1, dans lequel le raccord de fiche de sonde comprend un filetage intérieur et dans lequel le raccord à alésage axial du corps principal comprend un filetage extérieur complémentaire.

3. Système selon la revendication 1, dans lequel la valve (145) comprend un corps de valve (123) et un capuchon de valve (122) et dans lequel le capuchon de valve (122) comprend une périphérie extérieure qui assure l'étanchéité contre un profil intérieur d'un bord (146) à une extrémité distale de l'alésage axial du corps principal (143).

4. Système selon la revendication 3, dans lequel le corps de valve (123) comprend une pluralité d'ouvertures d'échantillonnage radiales (130).

5. Système selon la revendication 4, dans lequel une extrémité distale de chaque sonde de capteur (114) se termine entre les ouvertures d'échantillonnage radiales (130).

6. Système selon la revendication 4, dans lequel les ouvertures d'échantillonnage radiales (130) ne sont pas alignées transversalement pour induire un écoulement turbulent entre elles.

7. Système selon la revendication 4, dans lequel les ouvertures d'échantillonnage radiales (130) sont alignées transversalement pour induire un écoulement laminaire entre elles.

8. Système selon la revendication 3, dans lequel la fiche de sonde (113) comprend une face distale qui s'appuie contre une surface inférieure d'un bord proximal du corps de valve (123) pour pousser la valve (145) vers la position ouverte.

9. Système selon la revendication 1, dans lequel le corps de fiche de sonde (137) comprend une partie distale mineure du corps de fiche de sonde (137a) et une partie proximale majeure du corps de fiche de sonde (137b), dans lequel la partie majeure du corps de fiche de sonde (137b) comprend le raccord à alésage axial du corps principal et dans lequel le raccord à alésage axial principal comprend un filetage.

10. Système selon la revendication 1, dans lequel le corps principal (126) comprend une partie distale mineure du corps principal (140a) et une partie proximale majeure du corps principal (140b), dans lequel la partie proximale majeure du corps principal (140b) comprend le raccord de fiche de sonde et dans lequel le raccord de fiche de sonde comprend un filetage, dans lequel la partie proximale majeure du corps principal (140b) comprend un écrou (142) pour faire tourner le corps principal (126).

11. Système selon la revendication 1, comprenant en outre un contrôleur (100), le contrôleur (100) comprenant une interface pour un couplage fonctionnel à chaque type différent de capteur et un contrôleur de capteur (110) pour contrôler chaque type différent de sonde de capteur (114), dans lequel le contrôleur (100) comprend des données de mode capteur pour différents modes opérationnels pour chacun des différents types de sondes de capteur (114) et dans lequel le contrôleur (100) comprend une interface pour une sélection de l'un des différents types de sondes de capteur (114) et dans lequel le contrôleur de capteur (110) est configuré pour contrôler l'un des différents types de sondes de capteur (114) en fonction de la sélection et, dans lequel le contrôleur (100) comprend en outre un contrôleur d'interprétation de données (112) configuré pour interpréter les lectures de capteur en fonction de paramètres de seuil et dans lequel le contrôleur d'interprétation de données (112) est configuré pour détecter le moment où une lecture de capteur dépasse un paramètre de seuil respectif.

12. Système selon la revendication 1, dans lequel les différents types de sondes de capteur (114) comprennent au moins un capteur parmi un capteur de rayonnement (115), un capteur de débit (116), un capteur de pression (117), un capteur de température (118), un capteur capacitif (119), un capteur résistif (149) et une sonde de capteur optique.

13. Système selon la revendication 12, dans lequel le capteur comprend la sonde du capteur de débit et dans lequel la sonde de capteur de débit comprend au moins une parmi une sonde de capteur de débit à palette axiale et une sonde de capteur de débit à tube de Pitot, dans lequel la valve (145) comprend un corps de valve (123) et une pluralité d'ouvertures d'échantillonnage radiales (130) et dans lequel les ouvertures d'échantillonnage radiales (130) sont alignées transversalement pour induire un écoulement laminaire à travers la sonde du capteur de débit, dans lequel le corps principal est configuré pour être inséré dans l'ouverture d'inspection afin de contrôler l'orientation des ouvertures d'échantillonnage radiales (130) alignées transversalement.

14. Système selon la revendication 1, dans lequel, pour un sous-ensemble de fiches de sonde (113), l'alésage axial de fiche de sonde est un trou borgne ouvert au niveau d'une extrémité distale de la fiche de sonde (113).
